# EUROPEAN PATENT SPECIFICATION

(11) **EP 1 597 311 B1**
(45) Date of publication and mention of the grant of the patent: **15.08.2007**
(21) Application number: 04712633.9
(22) Date of filing: 19.02.2004
(51) Int. Cl.: C08K 5/53, C08K 5/3435, C08K 5/3415, C08K 5/52, C08G 69/48, C08G 63/91

(54) **SALT-LIKE REACTION PRODUCTS OF HALS DERIVATIVES AND PHOSPHOR-CONTAINING ORGANIC ACIDS FOR THE STABILISATION OF POLYMERIC MATERIALS**
SALZARTIGE REAKTIONSPRODUKTE VON HALS-DERIVATEN UND PHOSPHORHALTIGEN CARBONSÄUREN ZUR STABILISIERUNG VON POLYMEREN MATERIALIEN
PRODUITS DE REACTION DE TYPE SELS DE DERIVES DE HALS ET ACIDES ORGANIQUES CONTENANT DU PHOSPHORE POUR LA STABILISATION DE MATERIAUX POLYMERES

(30) Priority: 21.02.2003 EP 03003939
(43) Date of publication of application: 23.11.2005
(73) Proprietor: Clariant Finance (BVI) Limited, Road Town, Tortola (VG)
(72) Inventor: STANIEK, Peter, 79589 Binzen (DE)
(74) Representative: Dünnwald, Dieter
(86) International application number: PCT/IB2004/000508
(87) International publication number: WO 2004/074365

(56) References cited:
- EP-A- 0 537 837
- WO-A-02/053633
- US-A- 4 619 956
- US-A- 6 063 843
- SHIPES, S.: "Technical developments in the pigmentation of thermoplastic polyester fibers - the use of molecular recognition design chemistry in the pigmentation of condensation polymers" CONFERENCE PROCEEDINGS - JOINT INDA-TAPPI CONFERENCE, ATLANTA, GA, UNITED STATES, SEPT. 24-26, 2002 , 255-265 PUBLISHER: INDA, ASSOCIATION OF THE NONWOVEN FABRICS INDUSTRY, CARY, N. C. CODEN: 69DMEO, 2002, XP009030755

## Description

The present invention relates to new saltlike reaction products respectively premanufactured mixtures of compounds selected from the group of sterically hindered amine light stabilisers (HALS compounds) with organophosphorus acids or organophosphorus acid derivatives (organophosphorus acids and derivatives are in the following together called " organo P-acids ").

The saltlike products respectively mixtures are suitable for the heat and/or light stabilisation of polymer materials and are also suitable for the improvement of the processing and long term stability of polymers.

As known to the person skilled in the art, the stabilizing effect of HALS-compounds during exposition to mineral acids, for example originating from acid rain or from decomposition products of biocides or flame retardants, is dramatically reduced. This is considered to be mainly due to the formation of saltlike products of the HALS-compounds with mineral acids.

WO 02/053633 A discloses a method for making stabilised polyamide compositions. The stabilizer is a phosphorous stabilizer selected among phosphorous acid and hyperphosphorous acid. It is introduced before or during polymerisation of the polyamide. The use of said stabilizers enables to avoid foaming phenomena.

US 4,619,956 discloses a method of stabilizing a polymer film coating or molded article against the action of light, moisture, and oxygen. The method comprises incorporating in said polymer a stabilizingly and synergistically effective amount of (A) A 2,2,6,6-tetraalkylpiperidine compound or the acid addition salts or complexes with metal compounds thereof; and B) a tris-aryl-s-triazine compound. The use of benezenephosphonic acid is mentioned.

Surprisingly, it has now been found, that the products of the invention, although they have a saltlike character, are suitable for the stabilisation of polymers, in particular for the stabilisation of polar polymers, such as polyamide or polyester. Moreover, the products of the invention provide for an improvement of the processing properties, such as flowability during extrusion, injection molding or fiber spinning, for an improvement of colour, gloss, surface quality and/or the mechanical properties of the final product.

The HALS-compound (I) is 1,3-Benzoldicarboxamid-N,N'-bis(2,2,6,6-tetramethyl-4-piperidinyl) (which is commercially available from Clariant as Nylostab^{®} S-EED^{®}).

The organo P-acid (II) is selected from the group consisting of Diphenylphosphinic acid, Phenylphosphinic acid, Diethylphosphinic acid and Ethylphosphinic acid.

The products of the invention can be prepared in a reaction of HALS-compounds (I) with one or more organo P-acids (II), where, depending on the molar ratio of the reaction partners and the reaction conditions, full- or hemi-amine salts of organo P-acids are formed. These salts show to some extent a considerably higher solubility in water or lower alcohols.

The products of the invention can be synthesised in solvents, preferrably in water or lower alcohols, or they can be synthesised in the melt. The obtained solutions can either be used directly or the products can be isolated by removal of the solvent. The resulting solids can be used in a subsequent process, optionally after further finishing.

The application of the products of the invention in polycondensation polymers like polyamide 6.6, PET or similar types, which are produced from a di-acid and a di-amino- or a diol component respectively, are particularly advantageous, as the products of the invention are easily and homogeneously dispersed in the reaction mixture during the polycondensation reaction due to their good solubility.
The HALS-compounds themselves on the other hand are less soluble due to their hydrophobic character and therefore are more difficult to be homogeneously dispersed.

Other members of the group of products of the invention are better suited for the use in polymer melt processing due to their lower polarity. It was found that the preferred properties can be influenced by the selection of the components (I) and (II) within a wide range.

A further object of the invention are premanufactured mixtures of compounds - so- called "blends" in the plastic industry - consisting of the components (I) and (II) in a selected molar ratio. The products of the invention can thereby be partly or completely formed already during the making of such blends, or during incorporation into the polymer mass, respectively during incorporation into the raw materials.
The latter can be for example ε-Caprolactam (for PA6), AH-Salt-solution (for PA6.6) or precondensates from di-acids and dioles (for polyester).

As already known to the skilled person, such saltlike products respectively mixtures can also be formed by the use of HALS-compounds during the polycondensation and may disappear during continued polycondensation.

The premanufactured mixtures (blends) of the present invention are well defined with selected molar ratios. They are prepared by technical processes applicable also on large scale, which depending on the reaction conditions. Such blends, containing the appropriate amounts of component (I) and (II), may be added to the polycondensate. These premanufactured mixtures can be obtained from the melt (drop granulation techniques, prilling, extrusion, etc.), by compacting (roller compactors, tabletting, briquetting, press granulation, etc.), by granulation processes (spraying, fluidized bed granulation, drum granulation, etc.) or just by simple mixing.

Depending on the requirements, the molar ratio of the HALS-groups and the organo P-acid groups can be between 1:99 and 99:1, preferably between 40:60 and 60:40, and more preferably between 45:55 and 55:45 and most preferably the ratio is equimolar (50:50).

Preferred polymers for the application of the products of the invention are polyamides, like polyamide 6, polyamide 11, polyamide 12, polyamide 4.6, polyamide 6.6, polyamide 6.9, polyamide 6.10, polyamide 6.12, polyamide 12.12, and polyester like terephthalic acid/alkyldiol based polyester (for example PET, PBT), aliphatic polyester, aromatic polyester, liquid crystal polyester, polyetherester, and polycarbonates as well as their blends and copolymers.

Especially preferred polymers are polyamide 4.6, polyamide 6.6, polyamide 6, polyamide 11, Polyamide 12, polyethylenterepthalate (PET), polybutylenterephthalate (PBT), polycarbonate, their copolymers and blends.

The addition of the products of the invention can either take place before or during the preparation of the polymer as well as during further processing steps. The products can be used as solids (powder or blend), as solutions (in inert or reactive solvents), as masterbatch or as a concentrate and, in case of un-decomposed melting compounds, also as melt.

Of particular advantage is the addition in a free flowing preparation form, as obtained for example from the melt (drop granulation techniques, prilling, extrusion, etc.) by compacting (roller compactors, tabletting, briquetting, press granulation, etc.) or by granulation processes (spraying, fluidized bed granulation, drum granulation, etc.). These manufactured forms also comprise mixtures of the products of the invention or mixtures with other polymer additives or colorants known in the art (blends).
Apart of the products of the invention, other additives or colorants can be added to the polymer before, simultaneously or afterwards, including also blends containing the products of the invention.

Examples of such other additives are lightstabilizers (further HALS-compounds, UV-absorbers, excited state quenchers), phosphor- or sulphur based processing stabilizers, antioxidants (phenol- or amine based), antistatics, nucleating agents, clarifiers, flame retardants, reinforcing materials (e.g. mineral fillers, glass fibers, hollow glass spheres, carbon fibers, nanoscale reinforcing materials (e.g. nanoclays, carbon nanotubes), lubricants, anti block agents, colorants (pigments and colorants) etc.

The production and application of the products of the invention are shown in the following examples:

### EXAMPLE 1

### Synthesis of the salt from Nylostab^{®} S-EED^{®} and diphenylphosphinic acid:

74.2 g of diphenylphosphinic acid are added to a suspension of 75.3 Nylostab^{®} S-EED^{®} in 250 ml ethanol and stirred at 80°C for 2h. The solvent is removed under vacuum and the colorless, crystalline presscake is dried at 80°C in vacuum.

### EXAMPLE 2 - 3

Application of the invented compound in polyamides

### General processing recipe

The invented compounds are homogenised together with the polyamide powder on a Collin single screw extruder at the mentioned temperature of use. The current of the extruder motor (equivalent to torque), the pressure at the die, the mass temperature as well as the throughput are registered at constant machine settings.

A lower motor current and/or an increased throughput are important data, as they directly influence the production costs. A constant pressure at the die induces a good intake and feeding property and is of importance for the reproducible preparation of end use articles, as for example, injection molding articles or very uniform fibres. An increased pressure besides induces less damage of the polyamide through chain destruction during the process; the added additive contributes in this case to the polymer stability.

The results of the application obtained are summarised in the following table.

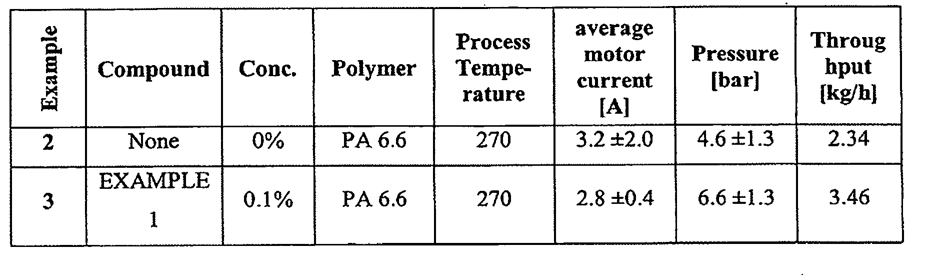

## Claims

1. Saltlike reaction products or premanufactured mixtures of compounds, which comprise a component (I) 1,3-Benzoldicarboxamid-N,N'-bis(2,2,6,6-tetramethyl-4-piperidinyl) and a component (II) selected from the group consisting of diphenylphosphinic acid, phenylphosphinic acid, diethylphosphinic acid and ethylphosphinic acid.

2. Saltlike reaction products or premanufactured mixtures according to claim 1, wherein both components (I) and (II) are comprised in a molar ration of 1:99 to 99:1.

3. Process for the preparation of saltlike reaction products or premanufactured mixtures according to claim 1, wherein the component (I) is reacted or mixed with a component (II).

4. Process according to claim 3, wherein a combination of the component (I) and the component (II) is obtained from the melt, by compacting, by granulation processes or just by simple mixing.

5. Use of saltlike reaction products or premanufactured mixtures according to claim 1 for the stabilisation of polymers against the degradation by light or heat.

## Patentansprüche

1. Salzartige Umsetzungsprodukte oder vorgefertigte Mischungen von Verbindungen, enthaltend eine Komponente (I) 1,3-Benzoldicarbonamid-N,N'-bis(2,2,6, 6-tetramethyl-4-piperidinyl) und eine Komponente (II), ausgewählt aus der Gruppe, bestehend aus Diphenylphosphinsäure, Phenylphosphinsäure, Diethylphosphinsäure und Ethylphosphinsäure.

2. Salzartige Umsetzungsprodukte oder vorgefertigte Mischungen nach Anspruch 1, bei denen beide Komponenten (I) und (II) in einem Molverhältnis von 1:99 bis 99:1 enthalten sind.

3. Verfahren zur Herstellung salzartiger Umsetzungsprodukte oder vorgefertigter Mischungen gemäß Anspruch 1, bei dem man die Komponente (I) mit einer Komponente (II) umsetzt beziehungsweise mischt.

4. Verfahren nach Anspruch 3, bei dem man eine Kombination aus Komponente (I) und Komponente (II) aus der Schmelze, durch Kompaktieren, durch Granulationsverfahren oder lediglich durch einfaches Mischen erhält.

5. Verwendung salzartiger Umsetzungsprodukte oder vorgefertigter Mischungen gemäß Anspruch 1 zur Stabilisierung von Polymeren gegen Abbau durch Licht oder Wärme.

## Revendications

1. Produits de réaction de type sels ou mélanges préfabriqués de composés, qui comprennent un composant (I) 1,3-benzoldicarboxamide-N,N'-bis(2,2,6,6-tétraméthyle-4-pipéridinyle) et un composant (II) choisi parmi le groupe constitué de l'acide diphénylphosphinique, de l'acide phényl-phosphinique, de l'acide diéthylphosphinique et de l'acide éthylphosphinique.

2. Produits de réaction de type sels ou mélanges préfabriqués selon la revendication 1, dans lesquels les deux composants (I) et (II) sont présents en un rapport molaire de 1:99 à 99:1.

3. Procédé de préparation de produits de réaction de type sels ou de mélanges préfabriqués selon la revendication 1, dans lequel le composant (I) est mis à réagir ou mélangé avec un composant (II).

4. Procédé selon la revendication 3, dans lequel une combinaison du composant (I) et du composant (II) est obtenue à partir de la masse fondue, par compactage, par des procédés de granulation ou juste par un simple mélangeage.

5. Utilisation de produits de réaction de type sels ou de mélanges préfabriqués selon la revendication 1 pour la stabilisation de polymères vis-à-vis de la dégradation par la lumière ou la chaleur.
